# EUROPÄISCHE PATENTSCHRIFT

(11) **EP 0 863 817 B1**
(45) Veröffentlichungstag und Bekanntmachung des Hinweises auf die Patenterteilung: **30.07.2003**
(21) Anmeldenummer: 97913134.9
(22) Anmeldetag: 01.10.1997
(51) Int. Cl.: B60J 7/043

(54) **FAHRZEUGDACH MIT WENIGSTENS EINEM DECKEL**
VEHICLE ROOF WITH AT LEAST ONE COVER
TOIT DE VEHICULE AVEC AU MOINS UN COUVERCLE

(30) Priorität: 01.10.1996 FR 9611950; 29.03.1997 DE 19713347
(43) Veröffentlichungstag der Anmeldung: 16.09.1998
(73) Patentinhaber: WEBASTO KAROSSERIESYSTEME GmbH, D-82131 Stockdorf (DE)
(72) Erfinder: REIHL, Peter, D-82319 Starnberg (DE); WINGEN, Bernhard, D-83620 Feldkirchen (DE); SCHÄTZLER, Walter, D-82319 Starnberg (DE); DE GAILLARD, François, F-85390 Mouilleron-en-Pareds (FR); KOHOUT, Erwin, D-82166 Gräfelfing (DE); LIEBHART, Wolfgang, D-80469 München (DE)
(74) Vertreter: Wiese, Gerhard
(86) Internationale Anmeldenummer: EP9705395
(87) Internationale Veröffentlichungsnummer: WO98014342

(56) Entgegenhaltungen:
- EP-A- 0 271 987
- DE-A- 4 109 698
- DE-C- 4 238 946
- DE-U- 8 514 459

## Beschreibung

Die Erfindung betrifft ein Fahrzeugdach mit wenigstens einem Deckel gemäß dem Oberbegriff des Patentanspruchs 1.

Ein derartiges Fahrzeugdach ist aus der EP-A-0 271 987 bekannt. Bei einem anderen Dach gemäß DE-C-4 238 946 wird der Deckel mittels einer Ausstellmechanik angehoben und dabei ein deckelfest angeordneter Führungszapfen an eine oberhalb des festen Daches angeordnete, relingartige Dachführung übergeben. Bei diesem Dach ragt bei geschlossenem Deckel die dachfeste Führung über die feste Dachhaut hervor, sodaß insgesamt kein glattflächiges Erscheinungsbild besteht. Ferner bleiben bei geöffnetem Deckel die aus in Fahrtrichtung offenen Kulissen nach vorne austretenden Ausstellhebel in aufgerichtetem Zustand stehen, was sich ebenfalls nachteilig auf die Optik dieses Fahrzeugdachs auswirkt. Es besteht ferner die Gefahr, daß sich der Ausstellhebel durch Rüttelbewegungen in seiner ausgestellten Position verändert, sodaß beim Schließen des Deckels der nach vorne fahrende Deckel mit der nach vorne geöffneten Deckelkulisse den entsprechenden Bolzen am Ausstellhebel unter Umständen verfehlen kann.

Der vorliegenden Erfindung liegt die Aufgabe zugrunde, ein Fahrzeugdach mit großer Öffnungsweite zu schaffen, das in allen Deckelpositionen ein ansprechendes optisches Erscheinungsbild bietet und bei dem eine sichere Abstützung des Deckels in allen Bewegungsphasen gewährleistet ist.

Diese Aufgabe wird erfindungsgemäß durch die Merkmale des Patentanspruchs 1 gelöst. Weitere vorteilhafte Ausgestaltungen der Erfindung sind den Unteransprüchen zu entnehmen.

Der Kemgedanke der vorliegenden Erfindung liegt darin, den Deckel beim Herausfahren aus der Dachöffnung im hinteren Bereich zusätzlich abzustützen, wobei die Abstützmittel bei geschlossenem Deckel unterhalb oder zumindestens bündig zur Dachkontur liegen.

Dadurch, daß das Führungselement von einem Stützhebel gebildet ist, der mit einem Ende im hinteren Bereich des Deckels angelenkt ist und dessen anderes Ende sich mit wenigstens einem Gleitelement in einer dachfesten Führung abstützt, wird der Deckel auch bei nahezu vollständigem Freilegen der Dachöffnung an der Vorderkante und an der Hinterkante sicher gehalten. Im Gegensatz zu bekannten Hebe-Schiebedächern, bei denen der Deckel nur im vorderen Drittel abgestützt wird, wird dadurch eine sehr große Stabilität, auch bei hohen Geschwindigkeiten, erreicht.

Gemäß einer vorteilhaften Ausführungsform tritt die Abstützvorrichtung nur beim Verfahren des Deckels aktiv in Funktion.

Vorteilhaft ist es aus optischen Gründen, daß die Abstützvorrichtung in Schließposition des Deckels in der vertikalen Projektion unterhalb desselben angeordnet ist.

Durch die Abstützung der Deckelhinterkante mittels eines vom Ausstellhebel unabhängigen Führungselementes in Form eines Stützhebels, der sich bei geschlossenem Deckel im Bereich einer dachfesten Führungsschiene flach ablegt, ist es möglich, die dachfeste Führung für diese Stützhebel auf einem Niveau unterhalb des festen Fahrzeugdachs verlaufen zu lassen, sodaß jegliche, auf der festen Dachhaut angeordnete Führungen entbehrlich sind. Das geschlossene Fahrzeugdach bildet somit ein vollkommen glattflächiges Erscheinungsbild ("flush glazing").

Eine besonders sichere Abstützung des Deckels ergibt sich dann, wenn der Stützhebel zwei Gleitelemente aufweist, von denen ein erstes, hinten angeordnetes, im ständigen Eingriff mit der dachfesten Führung steht und eine Schwenkachse für den Stützhebel bei einer Ausstellbewegung des Deckels definiert, und von denen das zweite Gleitelement nur während der Verschiebebewegung des Deckels mit der Führung in Eingriff steht. Durch den ständigen Eingriff des ersten Gleitelements ist eine problemlose Übergabe von der Ausstellphase in die Verschiebephase gewährleistet.

Wie bereits erwähnt, ist es besonders vorteilhaft, wenn die dachfeste Führung für den Stützhebel vollständig unterhalb des Niveaus des festen Fahrzeugdachs angeordnet ist. Dabei wird die dachfeste Führung des Stützhebels bevorzugt im Bereich des Seitenrandes des Deckels in einem vertieften Teil des festen Fahrzeugdachs angeordnet, in welchem ein separater Tragrahmen für die dachfeste Führung an einem abgesenkten Flansch angeordnet sein kann, oder bei dem das vertiefte Teil in Form einer vertieften Sicke direkt am Fahrzeugdach ausgebildet ist.

Zur weiteren Verbesserung des optischen Erscheinungsbildes sowie zum Schutz der dachfesten Führung des Stützhebels vor Verschmutzung ist es vorteilhaft, wenn die dachfeste Führung von einem flexiblen Dichtelement abgedeckt wird, welches den vertieften Teil des festen Fahrzeugdachs im hinteren Bereich überdeckt und welches beim Ausstellen und Verschieben des Deckels vom nach oben austretenden Stützhebel zumindestens teilweise verdrängt wird.

Bei der Erfindung ist vorgesehen, daß der Ausstellhebel von einer bezüglich des Stützhebels innenliegenden Anhebemechanik betätigbar ist. Es ist weiterhin vorteilhaft, wenn der Bereich des festen Fahrzeugdachs, in dem die Führung des Stützhebels angeordnet ist, gleichzeitig als längsverlaufende Wasserrinne fungiert, die gegenüber dem Bereich des Ausstellhebels über eine Dichtfläche abgedichtet ist. Somit ist die aktiv für das Ausstellen und Verschieben des Deckels erforderliche, empfindlichere Mechanik vor Witterungseinflüssen wirksam geschützt, während der lediglich beim Verschieben aktiv und sonst passiv an der Abstützung des Deckels beteiligte Stützhebel ohne weiteres mit einem Gleitelement im wasserführenden Bereich angeordnet werden kann.

Nachfolgend sind zwei Ausführungsbeispiele der Erfindung anhand der Zeichnungen beschrieben. Die Figuren 7 bis 14 zeigen eine Ausführungsart, die nicht zur Erfindung gehört. Es zeigt:
- Fig. 1: eine schematische perspektivische Ansicht eines Fahrzeugdachs mit geschlossenem Deckel.
- Fig. 2: eine Darstellung gemäß Fig. 1 bei vollständig geöffnetem Deckel.
- Fign. 3A und 3B: einen Längsschnitt durch den Seitenrand einer ersten Ausführungsform des Fahrzeugdachs im Bereich der Ausstellmechanik, wobei die Teile 3A und 3B unmittelbar hintereinander angeordnet sind, bei ausgestelltem Deckel.
- Fign. 4A und 4B: einen Längsschnitt analog zu den Fign. 3A und 3B bei vollständig geöffnetem Deckel.
- Fig. 5: Linie einen Querschnitt durch die Ausstell- und Abstützmechanik in Höhe der V-V in Fig. 3B.
- Fig. 6: einen Teillängsschnitt im Bereich der Abstützmechanik des Deckels.
- Fig. 7: einen schematischen Längsschnitt durch eine nicht zur Erfindung gehörende Variante eines Fahrzeugdaches.
- Fig. 8: die Variante gemäß Fig. 7 in ausgestellter Form.
- Fig. 9: die Variante gemäß Fig. 7 in geöffneter Form.
- Fig. 10: einen Teillängsschnitt durch die Variante gemäß Fig. 7 im Bereich der Deckelhinterkante.
- Fig. 11: eine schematische Darstellung einer zentralen Abstützvorrichtung.
- Fig. 12: eine schematische Darstellung zweier seitlicher Abstützvorrichtungen.
- Fig. 13: eine perspektivische Teilansicht einer Abstützvorrichtung gemäß den Fign. 7 bis 12 von oben, in eingeklapptem Zustand,
- Fig. 14: eine perspektivische Teilansicht wie in Fig. 13 bei ausgestellter Abstützvorrichtung,
- Fig. 15: einen Längsschnitt durch eine zweite Ausführungsform des Fahrzeugdachs in geschlossener Position,
- Fig. 16: einen Längsschnitt wie in Fig. 15 in der Ausstellposition der Deckelhinterkante,
- Fig. 17: eine vergrößerte Detailansicht des hinteren Bereichs der Mechanik gemäß Fig. 16,
- Fig. 18: einen Längsschnitt wie in Fig. 15 in der Übergabeposition von der Ausstellmechanik an die Abstützmechanik. und
- Fig. 19: eine schematische perspektivische Ansicht der Mechanik gemäß der Fig. 15

Das Fahrzeugdach 1 setzt sich aus einer oberhalb der Windschutzscheibe angeordneten, schwenkbaren Windabweislamelle 2, einem hinterhalb derselben liegenden verschiebbaren Deckel 3 sowie einer an diesen anschließenden festen Dachscheibe 4 zusammen. Seitlich werden die Windabweislamelle 2, der Deckel 3 und die Dachscheibe 4 von Seitenholmen 6 begrenzt.

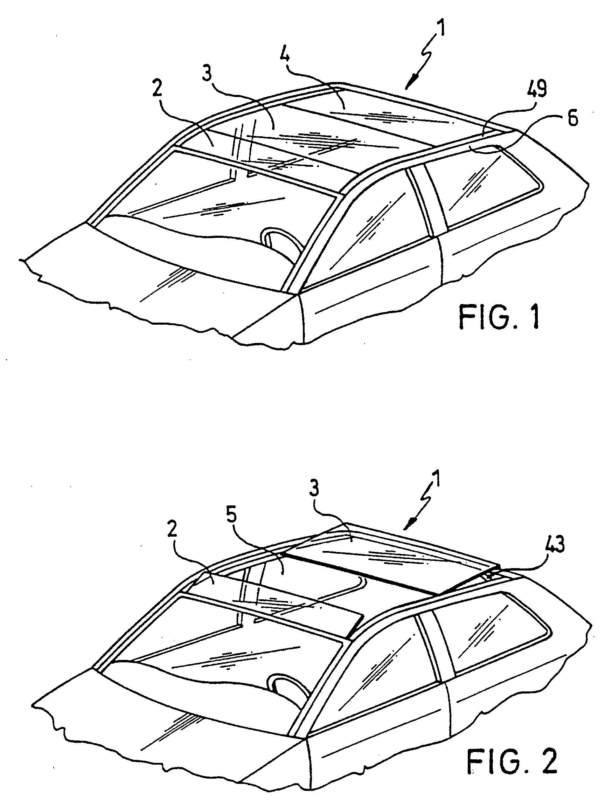

Im geschlossenen Zustand gemäß Fig. 1 bietet das Fahrzeugdach 1 ein vollkommen glattflächiges Erscheinungsbild. Obwohl der Deckel 3 zur Freigabe einer Dachöffnung 5 nach hinten über das feste Fahrzeugdach 1 verschiebbar ist, sind gemäß der vorliegenden Erfindung hierzu keinerlei oberhalb des festen Fahrzeugdachs angeordnete Führungen erforderlich. Im ausgestellten und nach hinten verfahrenen Zustand wird der Deckel 3 vielmehr mittels seitlich im Bereich der Deckelhinterkante angelenkter Stützhebel 43 abgestützt, welche in unterhalb des Niveaus der festen Dachhaut angeordneten Führungen verfahrbar sind und beim Austreten nach oben ein flexibles Dichtelement 49 teilweise verdrängen, welches zwischen den Seitenholmen 6 und den Dachteilen 2, 3, 4 angeordnet ist.

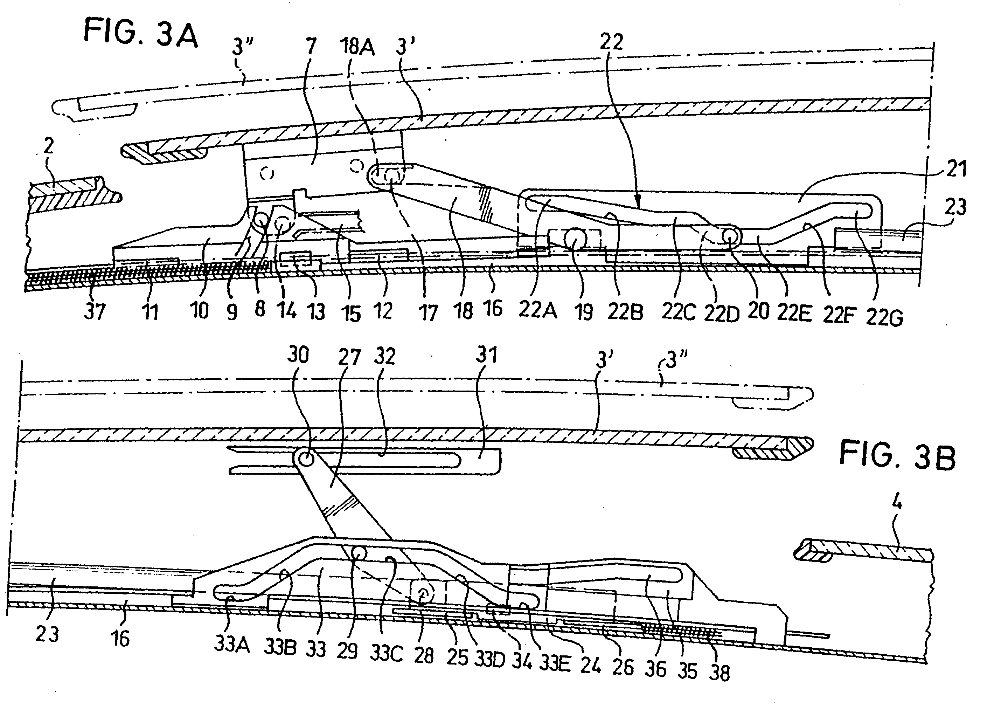

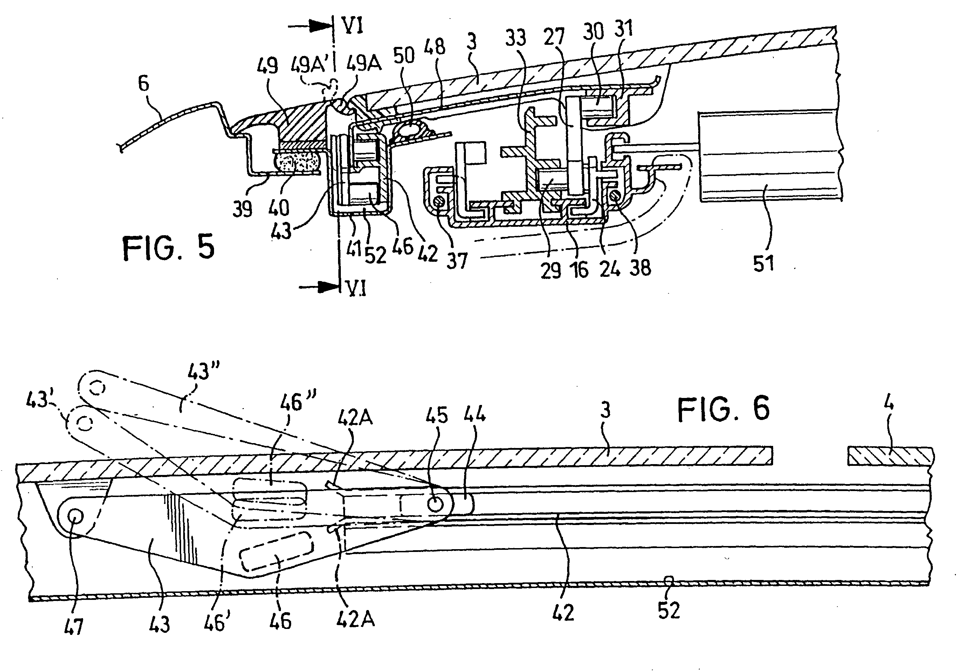

Die für das Ausstellen und Verschieben des Deckels 3 erforderliche Mechanik wird anschließend im Zusammenhang mit den Fign. 3A bis 4B beschrieben. Daran anschließend wird die seitlich außerhalb der Anhebemechanik angeordnete Abstützmechanik in Verbindung mit den Fign. 5 und 6 erläutert.

Nahe der Deckelvorderkante ist am Deckel 3 zu beiden Seiten jeweils ein nach unten abgewinkeltes Deckellager 7 angeordnet. Am Deckellager 7 ist ein Bolzen 8 vorgesehen, der in einer Kulisse 9 eines verschiebbar in einer Führungssschiene 16 gelagerten Steuerschlittens 10 gelagert ist und dort die Schwenkachse des Deckels 3 bei der Ausstell- bzw. Absenkbewegung des Deckels 3 definiert.

Der Steuerschlitten 10 ist mittels zweier Gleitplatten 11 bzw. 12 verschiebbar in den Führungsschienen 16 geführt. Während der Ausstell- bzw. Absenkbewegung, sowie in Schließposition des Deckels 3 wird der Steuerschlitten 10 von einem quer zur Verschieberichtung des Deckels 3 bewegbaren Riegelstein 13 mit der Führungsschiene 16 im Eingriff gehalten. Die Funktion eines solchen Riegelsteins 13 ist dem Fachmann beispielsweise aus der DE-A1 39 30 756 oder der DE-C1 40 01 759 prinzipiell bekannt und wird daher nicht im Detail beschrieben.

Am Deckellager 7 ist femer nahe dem Schwenkbolzen 8 ein Führungsbolzen 14 vorgesehen, der nach Anheben des Deckels im Bereich der Vorderkante in eine Führungsbahn 15 der Führungsschiene 16 eingeführt wird und der Führung des Deckels 3 beim Verschieben dient.

Am hinteren Ende des Deckellagers 7 ist ein Hebebolzen 17 angeordnet, der mit einer nach hinten offenen Kulisse 18A eines Anhebe-Hebels 18 zusammenwirkt. Der Anhebe-Hebel 18 ist als zweiseitiger Hebel ausgebildet, leicht abgewinkelt und in seinem mittleren Bereich in einem an der Führungsschiene 16 ortsfest angeordneten Drehlager 19 schwenkbar gelagert. Der nach vorne weisende Schenkel des Anhebe-Hebels 18 weist die bereits erwähnte, nach hinten geöffnete Kulisse 18A auf. Am nach hinten weisenden anderen Schenkel des Anhebe-Hebels 18 ist ein Führungsstift 20 angeordnet, der mit einer insgesamt mit 22 bezeichneten Kulissenbahn an einer in der Führungsschiene 16 verschiebbar gelagerten Anhebekulisse 21 im Eingriff steht. Die Anhebekulisse 21 dient der Bewegung des Anhebe-Hebels 18. Die Kulissenbahn 22 weist zu diesem Zweck mehrere Kulissenabschnitte 22A bis 22G auf.

Die Anhebekulisse 21 ist mittels einer stangenförmigen Verbindung 23 mit einem dahinter liegenden Gleitschlitten 24 verbunden, der über eine vorne liegende Gleitplatte 25 und eine hinten liegende Gleitplatte 26 verschiebbar in der Führungsschiene 16 geführt ist.

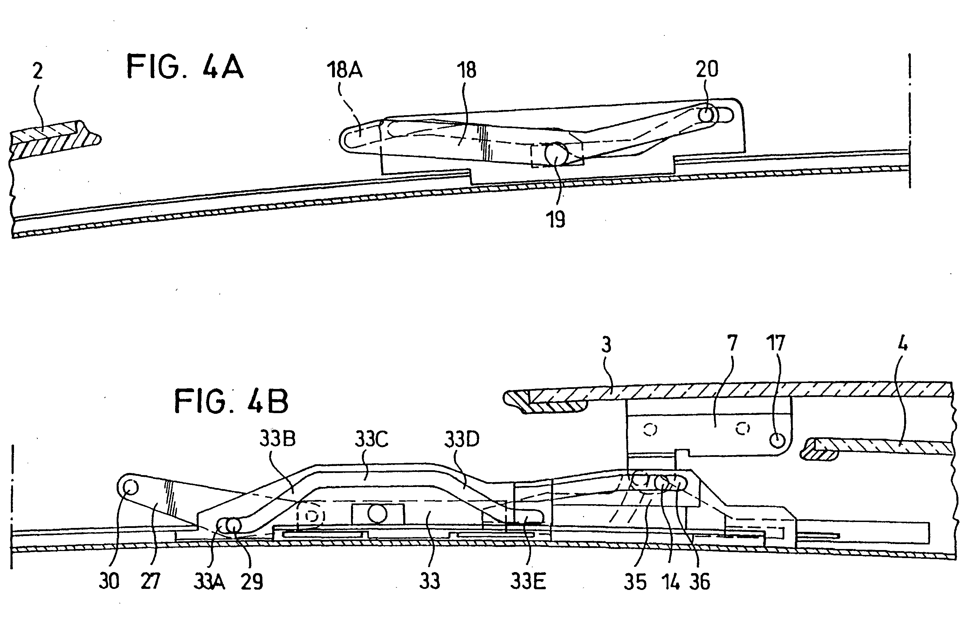

Während der vorne liegende Steuerschlitten 10 über seinen Riegelstein 13 wahlweise mit der Führungsschiene 16 verriegelbar oder für eine Verschiebung mit einem ersten Antriebskabel 37 koppelbar ist, das sich bei einer Öffnungsbewegung des Deckels 3 nach hinten bewegt, ist der hinten liegende Gleitschlitten 24 über einen Riegelstein 34 wahlweise mit der Führungsschiene 16 verriegelbar oder mit einem zweiten Antriebskabel 38 koppelbar, welches sich bei einer Öffnungsbewegung des Deckels 3 nach vorne bewegt. Eine solche gegenläufige Bewegung zweier Antriebskabel 37, 38, ausgehend von einem gemeinsamen Antriebsorgan, ist dem Fachmann beispielsweise aus der eingangs genannten DE-C1 42 38 946 (dort insbesondere aus Fig. 4) bekannt, und wird daher in dieser Anmeldung nicht im Detail beschrieben. Im Bereich des vorderen Endes des Gleitschlittens 24 ist an diesem mittels eines Schwenkbolzens 28 ein Ausstellhebel 27 angelenkt, der über einen in seinem mittleren Bereich angeordneten Führungsbolzen 29 mit einer ortsfest an der Führungsschiene 16 angeordneten Ausstellkulisse 33 im Eingriff steht und der mit einem an seinem dem Schwenkbolzen 28 gegenüberliegenden Ende angeordneten Ausstellbolzen 30 mit einer Kulissenbahn 32 einer Deckelkulisse 31 im Eingriff steht. Die Deckelkulisse 31 ist fest an der Unterseite des Deckels 3 angeordnet. Die Kulissenbahn 32 ist nach vorne geöffnet, sodaß der Ausstelibolzen 30 bei einer Verschiebebewegung des Deckels 3 nach hinten aus dieser austreten kann.

Die Ausstellkulisse 33 steuert die Bewegung des Ausstellhebels 27 bei einer Verschiebung des Gleitschlittens 24 und ihre Kulissenbahn weist zu diesem Zweck mehrere Abschnitte 33A bis 33E auf.

Im Bereich der Hinterkante der Dachöffnung 5 ist an der Führungsschiene 16 ferner eine ortsfeste Kulisse 35 angeordnet, die eine Kulissenbahn 36 aufweist, die zur Aufnahme und Begrenzung des Führungsbolzens 14 bei einer vollständigen Verschiebung des Deckels 3 nach hinten dient (siehe Fig. 4B). Durch die dem Endabschnitt der Kulissenbahn 36 vorgelagerte Rampe erfolgt kurz vor der vollständigen Öffnung noch ein Anheben der Deckelvorderkante, sodaß der geöffnete Deckel 3 annähernd parallel zur hinteren Dachhaut liegt (hier über der Dachscheibe 4).

Wie aus dem Querschnitt gemäß Fig. 5 ersichtlich, ist die komplette Anhebemechanik mit dem Ausstellhebel 27 und der Aussstellkulisse 33 im Randbereich des Deckels 3 vollständig unterhalb desselben angeordnet. Zum Verschieben nach hinten ist der Deckel 3 zusätzlich mit einer Abstützmechanik versehen, welche sich im äußersten Randbereich des Deckels 3, also von der Fahrzeugmitte her gesehen außerhalb der Anhebemechanik, befindet. Sowohl die Anhebemechanik mit dem Ausstellhebel 27 als auch die Abstützmechanik mit einem Stützhebel 43 befinden sich bei geschlossenem Deckel 3 vollständig unterhalb des Niveaus der festen Dachhaut 1.

Vom Seitenholm 6 ausgehend ist an diesem ein abgesenkter Flansch 39 ausgebildet, an dem mittels einer Kleberaupe 40 ein nach oben U-förmig offener Tragrahmen 41 befestigt ist. Der U-förmige Trog des Tragrahmens 41 dient dabei zum einen der Befestigung einer Führung 42 für den Stützhebel 43 und zum anderen mit seiner unten liegenden Bodenfläche gleichzeitig als längs verlaufende Wasserrinne 52. Dabei ist die Führung 42 an einer innenliegenden Seitenwand des Tragrahmens 41 in einem Abstand von der Bodenfläche desselben befestigt, sodaß die Führung 42 ebenfalls oberhalb und somit außerhalb des eigentlichen wasserführenden Bereiches angeordnet ist.

Der Bereich zwischen dem Seitenholm 6 und dem Rand des Deckels 3 ist mittels eines vorzugsweise über die gesamte Länge des Fahrzeugdachs 1 verlaufenden flexiblen Dichtelements 49 abgedeckt. Dieses Dichtelement 49 weist an seiner dem Seitenrand des Deckels 3 zugewandten Kante eine besonders flexible Dichtlippe 49A auf, durch die beim Ausstellen des Deckels 3 oder bei dessen Verschiebung nach hinten der Stützhebel 43 nach oben austritt und diese dabei in die mit 49A' bezeichnete Lage verdrängt.

Auf einem nach innen weisenden annähernd horizontalen Flansch des Tragrahmens 41 ist eine längsverlaufende Dichtung 50 angeordnet, welche den außenliegenden wasserführenden Bereich der Wasserrinne 52 und der darüber angeordneten Abstützmechanik mit dem Stützhebel 43 von der innenliegenden Anhebemechanik mit dem Ausstellhebel 27 trennt.

Da das Fahrzeugdach 1 mit seinem transparenten Deckel 3 und der dahinterliegenden festen Dachscheibe 4 bei intensiver Sonneneinstrahlung nicht genügend Schutz vor einer Aufheizung des Fahrzeuginnenraums bieten würde, ist an der Führungsschiene 16 wenigstens ein Rollo 51 angeordnet, das im ausgezogenen Zustand den Deckel 3 und/oder die Dachscheibe 4 von unten her abdeckt. Es können auch zwei Rollos 51 unmittelbar hintereinander unterhalb der Trennstelle zwischen Deckel 3 und Dachscheibe 4 angeordnet sein, von denen einer zur Abschattung des Deckels 3 und der andere zur Abschattung der Dachscheibe 4 dient.

Wie aus Fig. 6 zu ersehen, weist der Stützhebel 43 an seinem nach vorne gerichteten Ende einen Anlenkbolzen 47 auf, mittels dem er an einem nach unten abgewinkelten Teil eines Deckelinnenblechs 48 schwenkbar angelenkt ist. An seinem hinteren Ende weist der Stützhebel 43 ein hinteres Gleitelement 44 auf, welches mit der schienenartigen Führung 42 ständig im Eingriff steht und welches eine Schwenkachse 45 für den Stützhebel 43 bildet. Etwa im mittleren Bereich ist am Stützhebel 43 ein vorderes Gleitelement 46 befestigt, das beim Anheben des Stützhebels 43 bei einer Ausstellbewegung des Deckels 3 mit angehoben wird und dabei in die mit 46' bezeichnete Lage gerät, in welcher es sich auf derselben Höhe mit der Führung 42 befindet und über die an dieser angeordneten Einführschrägen 42A bei einer Verschiebung des Deckels 3 nach hinten zusätzlich zu dem hinteren Gleitelement 44 in die Führung 42 eintritt und somit den Stützhebel 43 in seiner Position 43' stabil abstützt. Die mit 43" bezeichnete Position des Stützhebels, bei der das vordere Gleitelement 46 eine mit 46" bezeichnete Position einnimmt, ist optional dann vorgesehen, wenn die Ausstellposition des Deckels 3 mit seiner Hinterkante auf Wunsch des Kunden höher liegen soll als während der Verschiebebewegung nach hinten.

Der Stützhebel 43 nimmt an der Ausstellbewegung des Deckels nur passiv teil. Aktiv wird die Ausstell- und Absenkbewegung des Deckels 3 mittels des Ausstellhebels 27 gesteuert. Bei einem Verschieben des Deckels nach hinten übernimmt der Stützhebel 43 die stabile Abstützung der Hinterkante des Deckels 3 ab dem Moment, in dem sich beide Gleitelemente 44 und 46 im Eingriff mit der Führung 42 befinden.

Nachfolgend wird der Bewegungsablauf beim Öffnen des Deckels 3, ausgehend von seiner Schließposition, beschrieben. In dieser befindet sich der Deckel 3 in einer bündigen Lage mit dem umgebenden festen Fahrzeugdach, das im hinteren Bereich durch die feste Dachscheibe 4 repräsentiert wird. Der Gleitschlitten 24 ist mit dem zweiten Antriebskabel 38 gekoppelt, wobei der Riegelstein 34 außer Eingriff mit der Führungsschiene 16 ist. Der Steuerschlitten 10 ist hingegen über den Riegelstein 13 mit der Führungsschiene 16 verriegelt. Zu Beginn der Ausstellbewegung bewegt sich das zweite Antriebskabel 38 in Fahrtrichtung nach vorne und das erste Antriebskabel 37 entgegen der Fahrtrichtung nach hinten. Dabei legt das erste Antriebskabel 37 zunächst einen Leerweg zurück.

Bei vollständig geschlossenem Deckel 3 befindet sich der Führungsbolzen 29 am Ausstellhebel 27 im Abschnitt 33E der Ausstellkulisse 33, wobei der Ausstellhebel 27 eine nach vorn flach liegende Position einnimmt. Der Führungsstift 20 des Anhebe-Hebels 18 befindet sich im vorderen Abschnitt 22A der Kulissenbahn 22 der Anhebekulisse 21, wobei der Anhebe-Hebel 18 ebenfalls eine nach vorn flach liegende Position einnimmt. Beim Verschieben des Gleitschlittens 24 nach vorne durchläuft der Führungsbolzen 29 des Ausstellhebels 27 den schräg nach vorne geneigten Abschnitt 33D der Ausstellkulisse 33, wobei der Ausstellhebel 27 eine zunehmend aufgerichtete Position einnimmt. Gleichzeitig durchläuft der Führungsstift 20 den Abschnitt 22B der Kulissenbahn 22, wobei der vordere Schenkel des Anhebe-Hebels 18 sich langsam anhebt und wobei über die Kulisse 18A an seiner Vorderkante und den Hebebolzen 17 das Deckellager 7 gleichzeitig mit angehoben wird. Der Deckel 3 wird dabei insgesamt hinten stärker als vorne angehoben und kommt mit seiner Hinterkante und seiner Vorderkante von einer Dichtung frei. Durch das Anheben der Deckelvorderkante wird der Deckel 3 auch in eine weniger stark geneigte Position gegenüber der Dachscheibe 4 gebracht, sodaß beim Verfahren des Deckels 3 eine nahezu parallele Lage zur Dachscheibe 4 mit sehr geringem Abstand zwischen beiden Bauteilen erreicht werden kann. Bei der Ausstellbewegung des Deckels 3 gleitet der Ausstellbolzen 30 in der Kulissenbahn 32 der Deckelkulisse 31 nach vorne. Durch die Führung des vorderen Deckellagers 7 mit dem Bolzen 8 in der schräg nach hinten aufwärts geneigten Kulisse 9 des Steuerschlittens 10 wird dem Deckel 3 beim Anheben gleichzeitig eine geringe Bewegung nach hinten aufgezwungen, die ein Klemmen der Dichtung im Bereich der Deckelvorderkante vermeidet.

In seiner vollständig ausgestellten Position ist der Deckel 3 gemäß den Fign. 3A und 3B mit 3' bezeichnet. Diese Position entspricht gleichzeitig der Höhe, in welcher der Deckel 3 im geringen Abstand über die feste Dachscheibe 4 nach hinten verschiebbar ist. Durch eine entsprechende Gestaltung der Kulissenbahnen 22 und 33 läßt sich jedoch auch eine Ausstellposition des Deckels erreichen, die in den Fign. 3A und 3B mit 3" angedeutet ist. In einer solchen Deckelposition wird an der Hinterkante ein vergrößerter Lüftungsspalt als Zwischenposition freigegeben. Vor dem Verschieben nach hinten würde der Deckel 3 in diesem Falle durch einen entsprechend geneigten Kulissenabschnitt der Kulissen 22 und 33 wieder in die mit 3' bezeichnete Position abgesenkt, sodaß Deckel 3 und Dachscheibe 4 beim Verschieben des Deckels 3 nach hinten einen sehr geringen Abstand aufweisen. Dadurch werden Windgeräusche und Schwingungen, insbesondere bei höheren Geschwindigkeiten, stark reduziert.

In der mit 3' bezeichneten Stellung des Deckels befindet sich, wie in den Fign. 3A und 3B dargestellt, der Führungsbolzen 29 des Ausstellhebels 27 im horizontalen mittleren Abschnitt 33C der Ausstellkulisse 33 und der Führungsstift 20 in einem in etwa horizontalen mittleren Abschnitt 22E der Kulissenbahn 22. Der Ausstellbolzen 30 steht immer noch im Eingriff mit der Kulissenbahn 32 der Deckelkulisse 31. Der Führungsbolzen 14 des vorderen Deckellagers 7 steht vor seinem Eintritt in die Führungsbahn 15 und das vordere Gleitelement 46 steht in der mit 46' bezeichneten Position vor seinem Eintritt in die Einführschrägen 42A der Führung 42. In dieser Übergabe-Position von der Ausstellmechanik zur Abstützmechanik ist der Leerweg des ersten Antriebskabels 37 beendet und ein an diesem Antriebskabel 37 vorgesehener Mitnehmer drängt den Riegelstein 13 aus seiner Verriegelungsposition mit der Führungsschiene 16 heraus und in eine Kopplungsposition des Antriebskabels 37 mit dem Steuerschlitten 10 hinein. Bei einer weiteren Bewegung der Antriebskabel wird der Deckel 3 nunmehr durch die Koppelung des Bolzens 8 mit der Kulisse 9 des Steuerschlittens 10 nach hinten bewegt. Dabei tritt der Führungsbolzen 14 in die Führungsbahn 15 ein und das vordere Gleitelement 46 am Stützhebel 43 tritt in die Führung 42 ein. Bei einer weiteren Verschiebung des Deckels nach hinten tritt der Hebebolzen 17 am vorderen Deckellager 7 aus der nach hinten geöffneten Kulisse 18A des Anhebe-Hebels 18 aus und gleichzeitig oder kurz darauf tritt der Ausstellbolzen 30 am Ausstellhebel 27 aus der nach vorne geöffneten Kulissenbahn 32 der Deckelkulisse 31 aus. Durch die noch andauernde Kopplung des Gleitschlittens 24 mit dem zweiten Antriebskabel 38 wird der Ausstellhebel 27 durch den schräg nach vorne geneigten Bahnabschnitt 33B im Zusammenwirken mit dem Führungsbolzen 29 in eine abgesenkte Position bewegt. Durch die Koppelung der Anhebekulisse 21 über die Verbindung 23 mit dem Gleitschlitten 24 wird gleichzeitig der Anhebe-Hebel 18 beim Durchlaufen des Führungsstiftes 20 durch den schräg nach hinten aufwärts geneigten Bahnabschnitt 22F der Kulissenbahn 22 in eine nach vorne abgesenkte Position überführt.

Sobald der Führungsstift 20 den kurzen horizontalen Endabschnitt 22G der Kulissenbahn 22 und der Führungsbolzen 29 den vorderen horizontalen Endabschnitt 33A der Ausstellkulisse 33 erreicht haben, wird die Koppelung zwischen dem Gleitschlitten 24 und dem zweiten Antriebskabel 38 aufgehoben, wobei der Riegelstein 34 gleichzeitig in eine Verriegelungsposition des Gleitschlittens 24 mit der Führungsschiene 16 in eine dort vorhandene Aufnahme überführt wird. Bei der weiteren Verschiebung des Deckels 3 nach hinten legt dann das nunmehr entkoppelte zweite Antriebskabel 38 einen Leerweg nach vorne zurück.

Bei vollständig geöffnetem Deckel 3 wird, wie aus Fig. 4A und 4B zu entnehmen, der Führungsbolzen 14 in die am Ende der Führungsbahn 15 angeordnete, mit einem leicht ansteigenden Bahnabschnitt und einem horizontalen Endabschnitt ausgestattete Kulissenbahn 36 der ortsfesten Kulisse 35 eingeführt. Das vordere Deckellager 7 liegt dabei unmittelbar vor der festen Dachscheibe 4 an. Mittels der beschriebenen Mechanik läßt sich somit eine sehr große Öffnungsweite des außen geführten Deckels 3 erreichen. Der Anhebe-Hebel 18 und der Ausstellhebel 27 sind nach vorne abgesenkt und befinden sich dabei ebenfalls unter dem Niveau der umgebenden festen Dachhaut, sodaß keinerlei störender optischer Einfluß durch die Anhebemechanik vorliegt. Die Führung im Bereich der Hinterkante des Deckels erfolgt während der Verschiebebewegung ausschließlich durch die Stützhebel 43, die mit beiden Gleitelementen 44 bzw. 46 sicher in der dachfesten Führung 42 geführt sind, welche sich ebenfalls unterhalb des Niveaus des festen Fahrzeugdachs 1 befindet. Über das feste Fahrzeugdach 1 ragen somit in der vollständig geöffneten Position lediglich die relativ schlanken Stützhebel 43 heraus, welche beim Verschieben die Dichtlippe 49A des Dichtelementes 49 abschnittsweise verdrängen.

Die Schließbewegung erfolgt exakt in umgekehrter Reihenfolge wie vorstehend beschrieben.

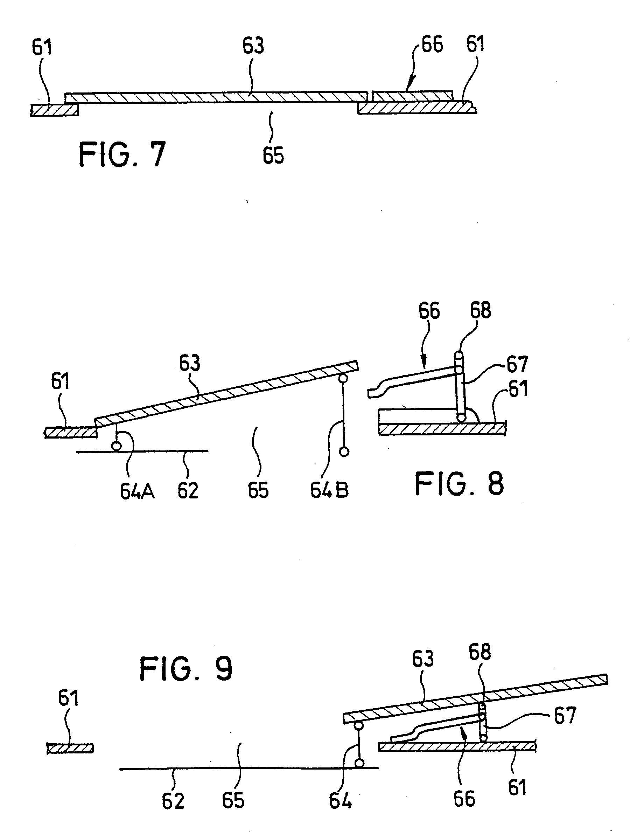

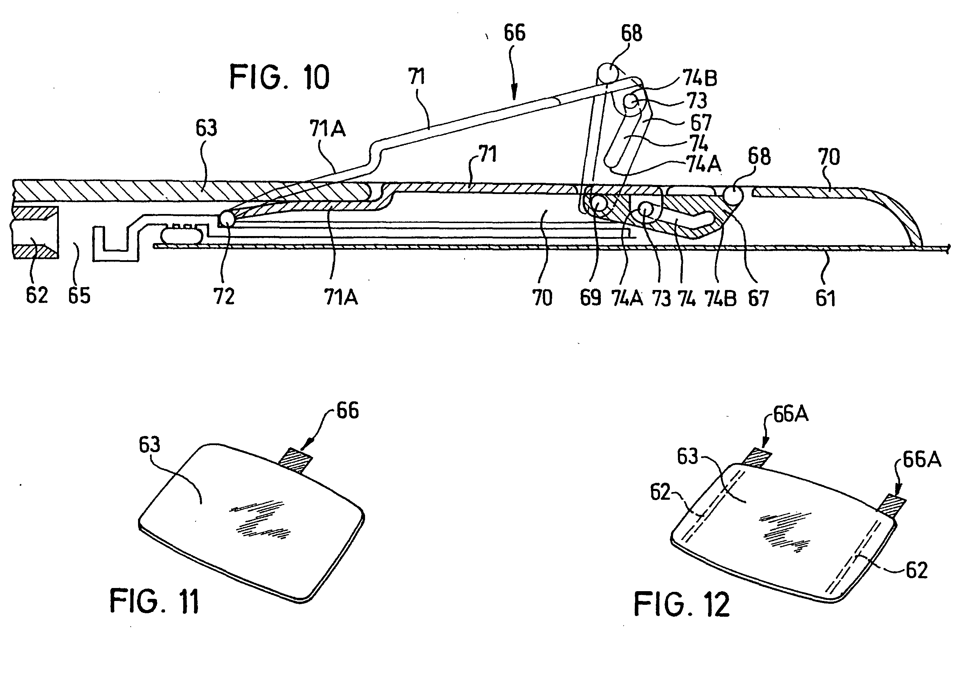

Bei der in den Fign. 7 bis 14 dargestellten, nicht zur Erfindung gehörenden Ausführungsform ist in einem festen Fahrzeugdach 61 ein bewegbarer Deckel 63 zur wahlweisen Abdeckung einer Dachöffnung 65 vorgesehen. Der Deckel 63 ist mit einem insgesamt mit 64 bezeichneten Ausstellmechanismus, bestehend aus einem vorderen Schwenklager 64A und einem hinteren Ausstellhebel 64B mit seiner Hinterkante über das feste Fahrzeugdach ausstellbar (Fig. 8) und anschließend nach hinten verfahrbar (Fig. 9). Beim Verfahren nach hinten, wobei der Antrieb über ein nicht dargestelltes Antriebskabel, das am vorderen Teil 64A des Ausstellmechanismus angelenkt sein kann, erfolgt, wird der Deckel im Bereich seiner Hinterkante durch einen zusätzlichen Abstützmechanismus 66 an seiner Unterseite abgestützt. Der Abstützmechanismus 66 setzt sich aus einem Stützhebel 67 und einem Schwenkhebel 71 zusammen. Der Schwenkhebel 71 ist im Bereich der Hinterkante des Deckels 63 unterhalb derselben am festen Fahrzeugdach 61 mittels eines Schwenklagers 72 schwenkbar gelagert. Er hintergreift mit einer Kröpfung die Hinterkante des Deckels 63 in dessen Schließposition (Fig. 10). An seinem hinteren Ende steht der Schwenkhebel 71 über einen Bolzen 73 mit einer Kulisse 74 im Eingriff, die am Stützhebel 67 ausgebildet ist. Der Stützhebel 67 weist an seinem hinteren Ende ein Gleitelement 68 auf, das im ausgestellten Zustand, der in Fig. 10 in nicht schraffierter Position dargestellt ist, den obersten Teil des Abstützmechanismus 66 bildet. Dieses Gleitelement 68 dient beim nach hinten Verfahren des Deckels 63 gemäß Fig. 9 als zusätzliche hintere Abstützung für den Deckel 63. In dieser Position gemäß Fig. 9 sind die beiden Elemente des Ausstellmechanismus 64 unterhalb der Vorderkante des Deckels nahe zusammengefahren, sodaß der Deckel 63 ebenfalls die Dachöffnung 65 nahezu vollständig freigeben kann, wobei mittels der zusätzlichen Abstützung über das Gleitelement 68 des Abstützmechanismus 66 dennoch eine gute Abstützung der Hinterkante des Deckels 63 erfolgt. Die Abstützung des Deckels 63 kann dabei im einfachsten Fall durch ein Aufliegen des Deckels 63 auf dem Gleitelement 68 erfolgen; bei einer verbesserten, nicht dargestellten Ausführungsform gerät das Gleitelement 68 beim Verschieben des Deckels 63 mit einer schienenförmigen Führung an der Unterseite des Deckels in Eingriff, sodaß ein Abheben der Hinterkante des Deckels infolge von Erschütterungen oder Schwingungen verhindert wird.

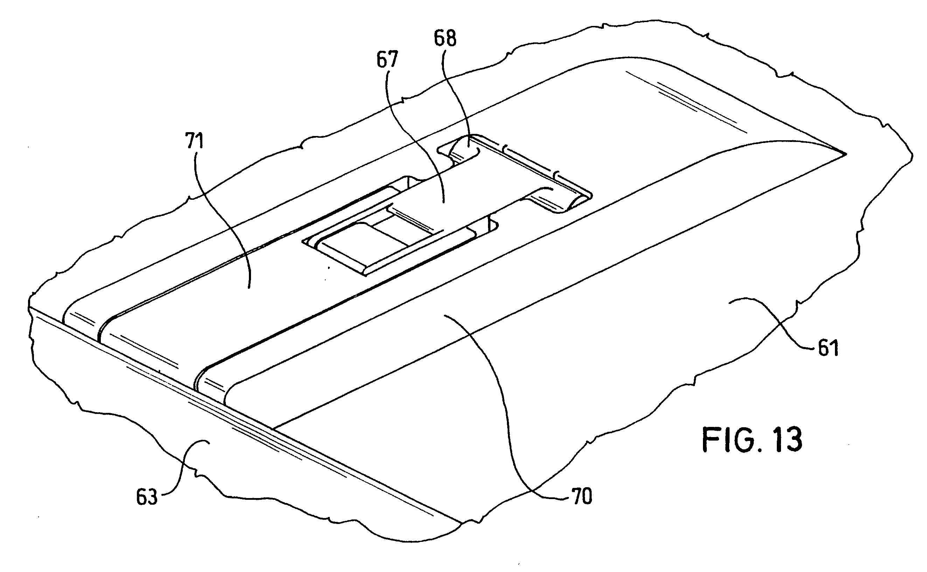

Der Abstützmechanismus 66 kann - wie in Fig. 11 schematisch angedeutet - lediglich einfach in zentraler Anordnung hinter der Hinterkante des Deckels 63 vorgesehen sein. Er kann jedoch auch in einer alternativen Ausführungsform gemäß Fig. 12 vorteilhaft zu beiden Seiten im Bereich der Hinterkante des Deckels 63 vorgesehen sein, wobei in dieser Ausführungsform die Bezugszahlen 66A verwendet wurden.

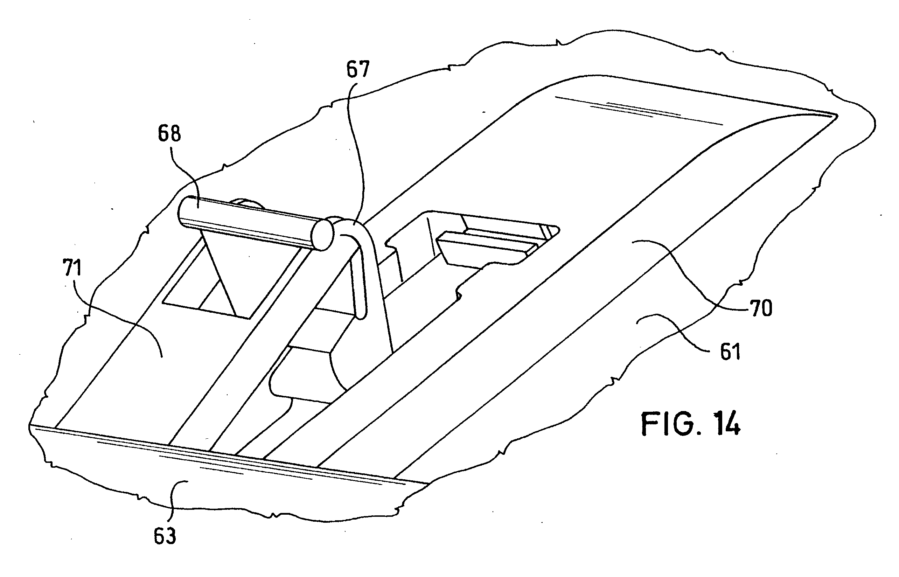

Der oder die zusätzlichen Abstützmechanismen 66 bzw. 66A können entweder in dem hinteren Bereich des festen Fahrzeugdaches 61 eingebettet sein oder es ist, wie dies in den Fign. 13 und 14 dargestellt ist, ein zusätzliches Dachteil 70, beispielsweise aus Kunststoff, vorgesehen, welches auf die feste Dachhaut 61 aufgesetzt ist und zur Beherbergung des Abstützmechanismus 67 bzw. 71 dient. Durch die gekröpfte Ausbildung des Schwenkhebels 71 bei 71a wird die Hinterkante des Deckels 63 untergriffen und es ergibt sich insgesamt dennoch ein glattflächiges Erscheinungsbild des Deckels 63 mit dem dahinterliegenden Abstützmechanismus 66 (Fig. 10). Die in den Fign. 7 bis 14 dargestellte Ausführungsform ist auch gut für einen nachträglichen Einbau in ein Fahrzeugdach geeignet.

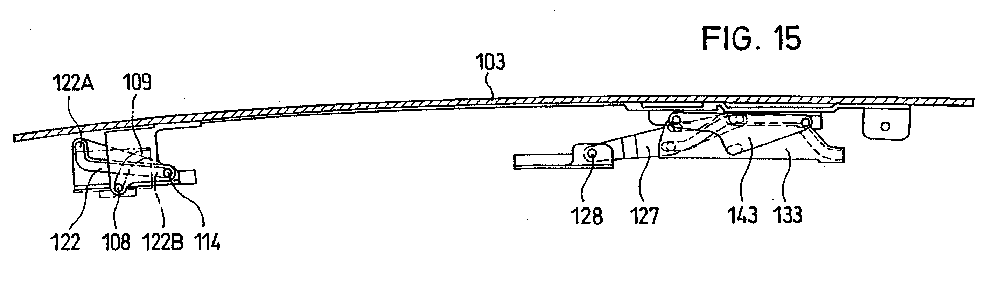

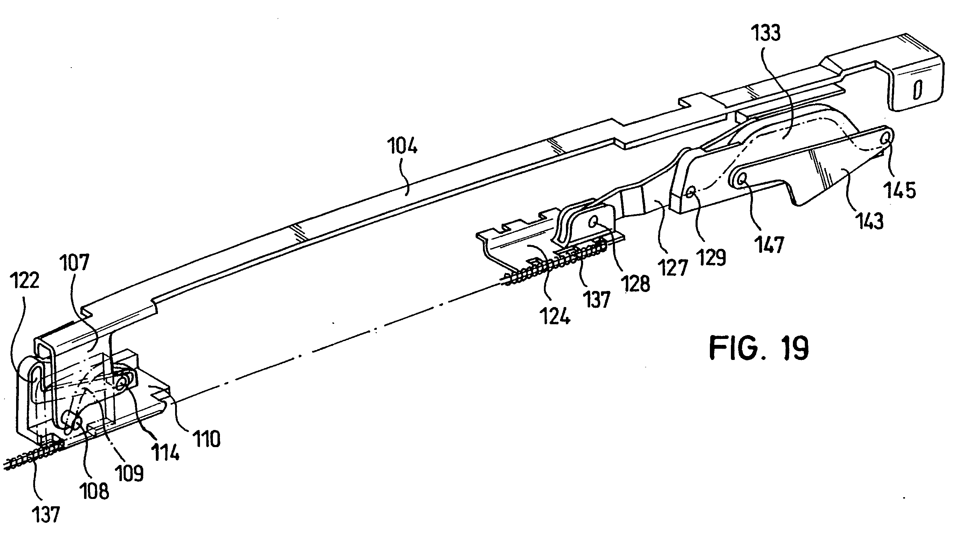

In den Fign. 15 bis 19 ist eine zweite Ausführungsform der Erfindung gezeigt. Bei ihr sind alle Teile mit einer zum ersten Ausführungsbeispiel gemäß den Fign. 1 bis 6 ähnlichen Funktion mit einer um 100 erhöhten Bezugszahl versehen. Bei diesem Ausführungsbeispiel werden der Ausstellmechanismus im Bereich der Deckelhinterkante und der Anhebe- und Verschiebemechanismus im Bereich der Deckelvorderkante mittels eines einzigen Antriebskabels 137 bewegt, das sich beim Öffnen des Deckels 103 ausschließlich von vorne nach hinten bewegt.

Im einzelnen besteht die vordere Anhebe- und Verschiebemechanik aus folgenden Bauteilen:
einem mit dem Deckelträger 104, der an der Unterseite des Deckels 103 zu beiden Seiten befestigt ist, verbundenen Deckellager 107, zwei zu unterschiedlichen Seiten an diesem Deckellager 107 befestigten Bolzen, von denen der vordere Bolzen 108 mit einer an der Führungsschiene 116 fest angeordneten Kulisse 109 und der hintere Führungsbolzen 114 mit einer Kulissenbahn 122 im Eingriff steht, die an einem vorderen Schlitten 110 angeordnet ist, der ebenso mit dem einzigen Antriebskabel 137 verbunden ist wie ein Gleitschlitten 124 zur Lagerung eines Ausstellhebels 127. Vorderer Schlitten 110 und Gleitschlitten 124 sind mittels des Antriebskabels 137 durch eine Kurbel oder einen Elektroantrieb längs zweier Führungsschienen 116 verfahrbar, die zu beiden Seiten der Dachöffnung unterhalb des Deckels 103 angeordnet sind.

Die hintere Ausstellmechanik besteht aus einem Ausstellhebel 127, der mit einem Schwenkbolzen 128 mit seinem vorderen Ende schwenkbar am Gleitschlitten 124 gelagert ist. Der Ausstellhebel 127 weist etwa in der Mitte einen Führungsbolzen 129 auf, der mit einer Kulissenbahn einer ortsfesten Ausstellkulisse 133 im Eingriff steht. Mit seinem hinteren Ende steht der Ausstellhebel 127 über einen Ausstellbolzen 130 im Eingriff mit einer Kulissenbahn 132, die an einer Ausstellkulisse 131 des Deckels 103 vorgesehen ist. Die Kulissenbahn 132 ist nach hinten geöffnet und ermöglicht nach dem Ausstellen des Deckels 103 und nach Übergabe der Abstützfunktion vom Ausstellhebel 127 auf einen seitlich davon nach außen separat angeordneten Stützhebel 143 ein Austreten des Ausstellbolzens 130 nach unten.

Die Kulissenbahn der Ausstellkulisse 133 setzt sich analog zum ersten Ausführungsbeispiel aus Bahnabschnitten 133A bis 133E zusammen.

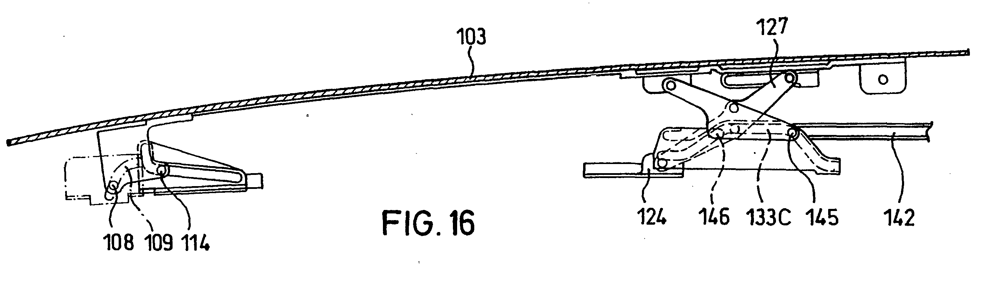

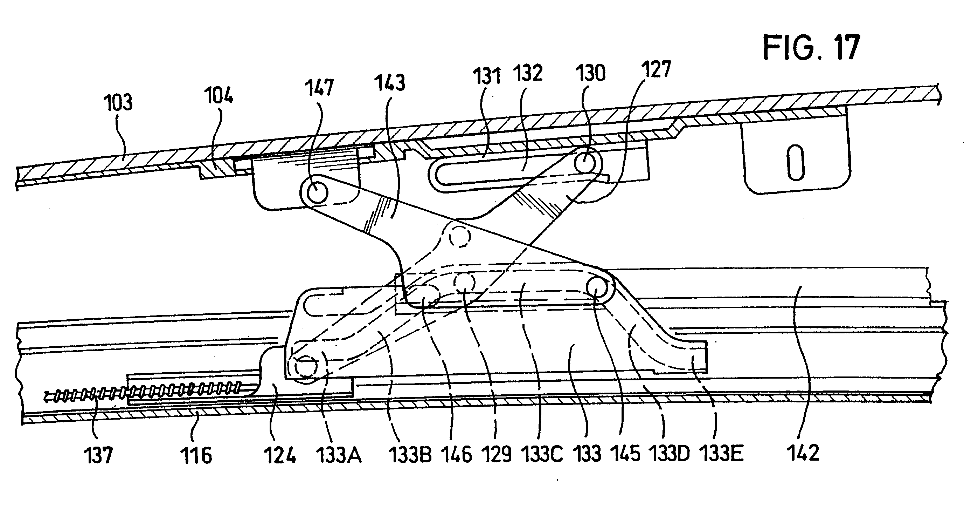

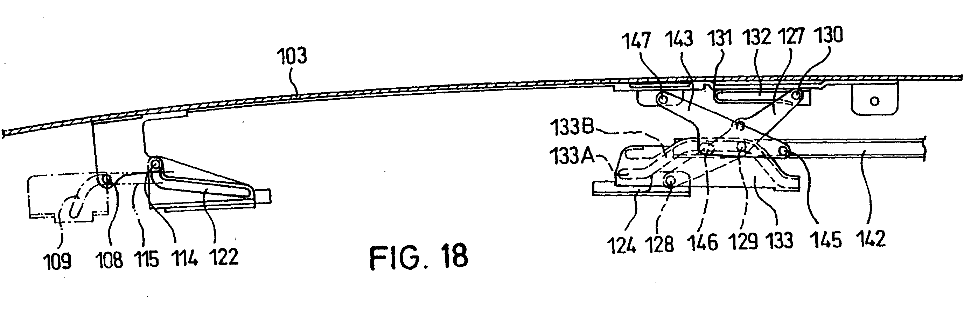

In der geschlossenen Position gemäß Fig. 15 befindet sich der Führungsbolzen 129 in einem am weitesten vorn liegenden in etwa horizontalen Bahnabschnitt 133A der Ausstellkulisse 133. Beim Verfahren des Gleitschlittens 124 nach hinten durchläuft der Führungsbolzen 129 einen daran anschließenden schräg aufwärts nach hinten geneigten Bahnabschnitt 133B und bewirkt dabei das Ausstellen der Deckelhinterkante. In der vollständig ausgestellten Position (Fig. 16 und 17) und der Übergabeposition (Fig. 18) an den Stützhebel 143 bewegt sich der Führungsbolzen 129 in einem am weitesten oben liegenden, in etwa horizontalen Bahnabschnitt 133C. Nach der Übergabe der Abstützung des Deckels 103 an den Stützhebel 143 wird der Ausstellhebel 127 beim Durchlaufen eines schräg nach unten geneigten Bahnabschnitts 133D aus der deckelfesten Kulissenbahn 132 nach unten geschwenkt und geht nach Durchlaufen eines unteren horizontalen Bahnabschnitts 133E flachliegend in eine horizontale Führung an der Führungsschiene 116 über. Im Gegensatz zum ersten Ausführungsbeispiel wird also der Ausstellhebel 127 bei der Verschiebung des Deckels 103 kontinuierlich mit nach hinten geschleppt und nicht etwa mittels eines Riegelsteines mit der Führungsschiene gekoppelt. Durch Wegfall der Riegelsteine 13 bzw. 34 ist diese Mechanik gegenüber dem Ausführungsbeispiel gemäß den Fign. 1 bis 6 wesentlich vereinfacht, weniger empfindlich und kostengünstiger herstellbar.

Der Stützhebel 143 ist analog zum Stützhebel 43 des ersten Ausführungsbeispiels ausgebildet. Er steht mit einer hinteren Schwenkachse 145 in ständigem Eingriff mit einer Führung 142, die parallel zur Führungsschiene 116 verläuft oder als integraler Bestandteil derselben ausgebildet ist. Der Stützhebel 143 wird beim Hochschwenken des Ausstellhebels 127 passiv mit angehoben, wobei sich ein vorderes Gleitelement 146 auf die gleiche Höhe wie die Schwenkachse 145 bewegt, sodaß bei der Übergabe der Stützfunktion vom Ausstellhebel 127 auf den Stützhebel 143 das Gleitelement 146 in die Führung 142 eintreten kann. Die Übergabeposition ist in Fig. 18 dargestellt. Dabei kann das Gleitelement 146 in die an der Unterseite ausgesparte Führung 142 eintreten. Die Anlage des Gleitelements 146 an der oberen Fläche der Führung 142 verhindert ein Anheben des Deckels 103 nach oben. Gleichzeitig nähert sich der Ausstellbolzen 130 der nach unten geöffneten Aussparung der Kulissenbahn 132. Der Ausstellbolzen 130 stützt den Deckel jedoch noch nach oben ab. Bei einer weiteren Bewegung des Gleitschlittens 124 nach rechts, ausgehend von der Fig. 18, tritt das Gleitelement 146 in einen oben und unten geschlossenen Bahnabschnitt der Führung 142 ein, wobei gleichzeitig das obere Ende des Ausstellhebels 127 mit dem Ausstellbolzen 130 nach unten aus dem geöffneten Teil der Kulissenbahn 132 ausschwenkt. Der Deckel 103 wird nun nach oben und unten ausschließlich vom Stützhebel 143 gehalten, der über den Anlenkbolzen 147 mit dem Deckel 103 gekoppelt ist.

Das vordere Ende des Deckels 103 wird mittels der Anhebe- und Verschiebemechanik beim Ausstellen der Hinterkante des Deckels 103 leicht mit angehoben, um von einer nicht dargestellten Dichtung freizukommen. Hierfür läuft der mit dem Antriebskabel 137 gekoppelte Schlitten 110, ausgehend von der Fig. 15, die die Schließlage zeigt, gemeinsam mit dem Gleitschlitten 124 synchron nach rechts.

Dabei durchläuft der Führungsbolzen 114 den schräg nach vorne ansteigend geneigten Bahnabschnitt 122B der Kulissenbahn 122 und hebt dabei den Deckel 103, der zusätzlich mittels des Bolzens 108 in der ortsfesten Kulisse 109 geführt ist, um einen Betrag an, der in Fig. 16 dargestellt ist. In den Fign. 16 und 17 ist die vollständige Ausstellposition dargestellt. Beim weiteren Verfahren des Schlittens 110 nach rechts steigt der Bolzen 114 in den im wesentlichen vertikalen Abschnitt 122A der Kulissenbahn 122 auf. Ab hier nimmt der Schlitten 110 den Deckel 103 zur Verschiebung nach hinten mit. Gleichzeitig wird der vordere Bolzen 108 von der ortsfesten Kulisse 109 an eine Führungsbahn 115 übergeben, die parallel zur Führungsschiene 116 angeordnet oder als integraler Bestandteil derselben ausgebildet ist. Die Schließbewegung erfolgt in umgekehrter Reihenfolge.

Die vorstehend beschriebenen Ausführungsbeispiele zeichnen sich dadurch aus, daß in jedem Falle zusätzlich zu einer Ausstellvorrichtung eine Abstützvorrichtung vorhanden ist, die bei geschlossenem Deckel entweder unterhalb des Deckels, seitwärts von diesem oder hinter dem Deckel bündig mit dem festen Dach oder unterhalb desselben angeordnet ist. Durch diese im Bereich der Deckelhinterkante angreifende zusätzliche Abstützvorrichtung ist eine besonders große Öffnungsweite des Deckels erzielbar, wobei auch bei nahezu vollständiger Öffnung eine stabile Abstützung der Deckelhinterkante erreicht wird. Dennoch wird im Gegensatz zu Fahrzeugdächern mit einer oberhalb des festen Fahrzeugdachs angeordneten Führung bei geschlossenem Deckel ein glattflächiges Erscheinungsbild erreicht.

### Bezugszeichenliste

- 1: Fahrzeugdach
- 2: Windabweislamelle
- 3: Deckel
- 4: Dachscheibe (Dachteil)
- 5: Dachöffnung
- 6: Seitenholm
- 7: Deckellager (vom)
- 8: Bolzen
- 9: Kulisse
- 10: Steuerschlitten
- 11: Gleitplatte (von 10, vorn)
- 12: Gleitplatte (von 10, hinten)
- 13: Riegelstein (für 10)
- 14: Führungsbolzen
- 15: Führungsbahn
- 16: Führungsschiene
- 17: Hebebolzen (an 7)
- 18: Anhebe-Hebel
- 18A: Kulisse (an 18)
- 19: Drehlager
- 20: Führungsstift
- 21: Anhebekulisse
- 22: Kulissenbahn (in 21)
- 22A-G: Abschnitte (von 22)
- 23: Verbindung (zwischen 21 und 24)
- 24: Gleitschlitten
- 25: Gleitplane (von 24, vorn)
- 26: Gleitplatte (von 24, hinten)
- 27: Ausstellhebel
- 28: Schwenkbolzen (von 27)
- 29: Führungsbolzen (an 27)ö
- 30: Ausstellbolzen (an 27)
- 31: Deckelkulisse
- 32: Kulissenbahn (von 31)
- 33: Ausstellkulisse
- 33A-E: Abschnitte (von 33)
- 34: Riegelstein (für 24)
- 35: Kulisse
- 36: Kulissenbahn (von 35)
- 37: (erstes) Antriebskabel
- 38: (zweites) Antriebskabel
- 39: Flansch
- 40: Kleberaupe
- 41: Tragrahmen
- 42: Führung
- 42A: Einführschrägen
- 43: Stützhebel
- 44: (hinteres) Gleitelement (von 43)
- 45: Schwenkachse (von 43)
- 46: (vorderes) Gleitelement(von 43)
- 47: Anlenkbolzen (von 43 an 48)
- 48: Deckelinnenblech
- 49: Dichtelement
- 49A: Dichtlippe
- 50: Dichtung
- 51: Rollo
- 52: Wasserrinne
- 61: Fahrzeugdach
- 62: Führungsschiene
- 63: Deckel
- 64A, B: Ausstellmechanismus
- 65: Dachöffnung
- 66, 66A: Abstützmechanismus
- 67: Stützhebel
- 68: Gleitelement
- 69: Schwenklager
- 70: Dachteil
- 71: Schwenkhebel
- 72: Schwenklager
- 73: Bolzen
- 74: Kulisse
- 74A, B: Kulissenabschnitte
- 103: Deckel
- 104: Deckelträger
- 107: Deckellager (vorn)
- 108: Bolzen
- 109: Kulisse
- 110: (vorderer) Schlitten
- 114: Führungsbolzen
- 115: Führungsbahn
- 116: Führungsschiene
- 122: Kulissenbahn
- 122A, B: Abschnitte (von 122)
- 124: Gleitschlitten
- 127: Ausstellhebel
- 128: Schwenkbolzen
- 129: Ausstellhebel
- 130: Ausstellbolzen
- 131: Deckelkulisse
- 132: Kulissenbahn
- 133: Ausstellkulisse
- 133A, B: Abschnitte (von 133)
- 137: Antriebskabel
- 142: Führung
- 143: Stützhebel
- 145: Schwenkachse
- 146: Gleitelement (von 143)
- 147: Anlenkbolzen

## Patentansprüche

1. Öffnungsfähiges Fahrzeugdach (1) mit wenigstens einem verschieb- und ausstellbaren Deckel (3, 103) zur Abdeckung einer Dachöffnung (5) in einer Schließposition, sowie mit einem sich daran anschließenden Dachteil (4), welcher Deckel (3, 103) zum Öffnen mittels einer Vorrichtung (27, 127) zum Ausstellen des Deckels (3, 103) an seiner Hinterkante nach oben in wenigstens eine Lüftungsposition ausstellbar ist, und welcher Deckel (3, 103) mittels einer Vorrichtung (10, 110) zum Verschieben des Deckels (3, 103) längs wenigstens einer dachfesten Führung (16, 42; 116, 142) in einer gegenüber der Schließposition angehobenen Lage in wenigstens eine Öffnungsposition oberhalb des Dachteils (4) verschiebbar ist, und mit einem im Bereich der Deckelhinterkante am Deckel (3, 103) mit seinem einen Ende angelenkten Stützhebel (43, 143) einer Abstützvorrichtung (43, 143), die in der Schließposition des Deckels (3, 103) eine auf dem Niveau oder unterhalb des Niveaus des festen Fahrzeugdachs (4) liegende Position aufweist, **dadurch gekennzeichnet, daß** der Stützhebel (43, 143) der Abstützvorrichtung zu einem separat gelagerten Ausstellhebel (27, 127) der Ausstellvorrichtung versetzt angeordnet ist und bei einer Verschiebung des Deckels sich mit seinem anderen Ende mit einem ersten Gleitelement (44, 145) in einer unterhalb des festen Fahrzeugdachs (4) angeordneten und sich hinter die Dachöffnung (5) erstreckenden dachfesten Führung (42, 142) verschiebbar abstützt.

2. Fahrzeugdach nach Anspruch 1, **dadurch gekennzeichnet, daß** das mit dem Stützhebel (43, 143) in ständigem Eingriff mit der dachfesten Führung (42, 142) stehende erste Gleitelement (44, 145) eine Schwenkachse (45, 145) für den Stützhebel (43, 143) bei einer Ausstellbewegung des Deckels (3, 103) definiert und daß der Stützhebel (43, 143) ein zweites Gleitelement (46, 146) aufweist, das nur während der Verschiebebewegung des Deckels (3, 103) mit der Führung (42, 142) im Eingriff steht.

3. Fahrzeugdach nach Anspruch 1 oder 2, **dadurch gekennzeichnet, daß** die dachfeste Führung (42) des Stützhebels (43) im Bereich des Seitenrandes des Deckels (3) in einem vertieften Teil (39, 41) des festen Fahrzeugdachs (1) angeordnet ist.

4. Fahrzeugdach nach einem der Ansprüche 1 bis 3, **dadurch gekennzeichnet, daß** die dachfeste Führung (42) von einem flexiblen Dichtelement (49) abgedeckt ist, welches beim Ausstellen und Verschieben des Deckels (3) vom nach oben austretenden Stützhebel (43) zumindest teilweise verdrängt wird.

5. Fahrzeugdach nach einem der vorhergehenden Ansprüche, **dadurch gekennzeichnet, daß** der Ausstellhebel (27) von einer bezüglich des Stützhebels (43) innen liegenden Mechanik (24, 33) betätigbar ist.

6. Fahrzeugdach nach einem der Ansprüche 3 bis 5, **dadurch gekennzeichnet, daß** der Bereich des festen Fahrzeugdachs (1), in dem die Führung (42) des Stützhebels (43) angeordnet ist, als längs verlaufende Wasserrinne (52) fungiert, die gegenüber dem Bereich des Ausstellhebels (27) über die Dichtfläche einer Dichtung (50) abgedichtet ist.

7. Fahrzeugdach nach einem der vorhergehenden Ansprüche, **dadurch gekennzeichnet, daß** je eine Abstützvorrichtung (43, 143) an beiden Seiten des Deckels (3, 103) angeordnet ist.

8. Fahrzeugdach nach einem der vorhergehenden Ansprüche, **dadurch gekennzeichnet, daß** die Vorrichtung zum Ausstellen (27) und die Vorrichtung zum Verschieben (10) des Deckels (3) von verschiedenen Antriebsorganen (37, 38) betätigbar sind.

9. Fahrzeugdach nach wenigstens einem der vorhergehenden Ansprüche 1 bis 7, **dadurch gekennzeichnet, daß** die Vorrichtung zum Ausstellen (127) und die Vorrichtung zum Verschieben (110) des Deckels (103) von einem gemeinsamen Antriebsorgan (137) betätigbar sind.

## Claims

1. Openable vehicle roof (1) with at least one sliding and push-out cover (3, 103) for covering a roof opening (5) in a closed position, and with an adjoining roof part (4), which cover (3, 103), for the purpose of opening, can be pushed out upwards at its rear edge into at least one ventilation position by means of a device (27, 127) for pushing the cover (3, 103) out, and which cover (3, 103) can be moved along at least one guide (16, 42; 116, 142) fixed to the roof in a position raised relative to the closed position into at least one open position above the roof part (4) by means of a device (10, 110) for sliding the cover (3, 103), and with a support lever (43, 143) of a support device (43, 143), the position of which is at the level or below the level of the fixed vehicle roof (4) in the closed position of the cover (3, 103), one end of the support lever being pivotally attached to the cover (3, 103) in the region of the rear edge of the cover, **characterized in that** the support lever (43, 143) of the support device is arranged offset relative to a separately mounted push-out lever (27, 127) of the push-out device and, during sliding of the cover, is supported slidably at its other end by means of a first sliding element (44, 145) in a guide (42, 142) which is arranged underneath the fixed vehicle roof (4), is fixed to the roof and extends behind the roof opening (5).

2. Vehicle roof according to Claim 1, **characterized in that** the first sliding element (44, 145), which is in continuous engagement, with the support lever (43, 143), with the guide (42, 142) fixed to the roof, defines a pivot (45, 145) for the support lever (43, 143) during a push-out movement of the cover (3, 103), and **in that** the support lever (43, 143) has a second sliding element (46, 146), which is in engagement with the guide (42, 142) during the sliding motion of the cover (3, 103).

3. Vehicle roof according to Claim 1 or 2, **characterized in that** the guide (42) of the support lever (43), the said guide being fixed to the roof, is arranged in the region of the lateral edge of the cover (3), in a recessed part (39, 41) of the fixed vehicle roof (1).

4. Vehicle roof according to one of Claims 1 to 3, **characterized in that** the guide (42) fixed to the roof is covered by a flexible sealing element (49), which is at least partially displaced by the support lever (43) emerging upwards during the pushing out and sliding of the cover (3).

5. Vehicle roof according to one of the preceding claims, **characterized in that** the push-out lever (27) can be actuated by a mechanism (24, 33) which is situated on the inside relative to the support lever (43).

6. Vehicle roof according to one of Claims 3 to 5, **characterized in that** the region of the fixed vehicle roof (1) in which the guide (42) of the support lever (43) is arranged acts as a longitudinally extending water channel (52) which is sealed off from the region of the push-out lever (27) by means of the sealing surface of a seal (50).

7. Vehicle roof according to one of the preceding claims, **characterized in that** a support device (43, 143) is arranged on each side of the cover (3, 103).

8. Vehicle roof according to one of the preceding claims, **characterized in that** the push-out device (27) and the device for sliding (10) the cover (3) can be actuated by various drive members (37, 38).

9. Vehicle roof according to at least one of preceding Claims 1 to 7, **characterized in that** the push-out device (127) and the device (110) for sliding the cover (103) can be actuated by a common drive member (137).

## Revendications

1. Toit ouvrant (1) de véhicule comprenant au moins un panneau de fermeture coulissant et à projection (3, 103) pour recouvrir une ouverture de toit (5) dans une position de fermeture, ainsi qu'une partie de toit (4) faisant suite à ce dernier, lequel panneau (3, 103), pour s'ouvrir, peut se projeter vers le haut au niveau de son arête arrière dans au moins une position d'aération à l'aide d'un dispositif (27, 127) pour projeter le panneau (3, 103), et lequel panneau (3, 103) peut coulisser en étant surélevé par rapport à la position fermée dans au moins une position ouverte au-dessus de la partie de toit (4) au moyen d'un dispositif(10, 110) pour faire coulisser le panneau (3, 103) le long d'au moins une glissière (16, 42 ; 116, 142) solidaire du toit, et comprenant également un levier d'appui (43, 143) qui est relié de manière articulée par l'une de ses extrémités dans la zone de l'arête arrière du panneau (3, 103) et qui fait partie d'un dispositif d'appui (43, 143) qui, lorsque le panneau (3, 103) est en position fermée, présente une position située au niveau du toit fixe (4) ou au-dessous de ce dernier, **caractérisé en ce que** le levier d'appui (43, 143) du dispositif d'appui est disposé décalé par rapport à un levier de projection (27, 127) du dispositif pour projeter le panneau qui est monté séparément, et, lorsque le panneau coulisse, ledit levier d'appui prend appui de façon coulissante, avec un premier élément de glissement (44, 144) situé à son autre extrémité, dans une glissière (42, 142) solidaire du toit, qui est disposée sous le toit fixe (4) du véhicule et qui s'étend au-delà de l'ouverture (5) du toit.

2. Toit de véhicule selon la revendication 1, **caractérisé en ce que** le premier élément de glissement (44, 144) qui est en prise permanente avec la glissière (42, 142) solidaire du toit par l'intermédiaire du levier d'appui (43, 143) définit un axe de pivotement (45, 145) pour le levier d'appui (43, 143) lors d'un mouvement de projection du panneau (3, 103), et **en ce que** le levier d'appui (43, 143) présente un second élément de glissement (46, 146) qui n'est en prise avec la glissière (42, 142) que pendant le coulissement du panneau (3, 103).

3. Toit de véhicule selon la revendication 1 ou 2, **caractérisé en ce que** la glissière (42) du levier d'appui (43) qui est solidaire du toit est placée dans la zone du bord latéral du panneau (3) dans une partie en renfoncement (39, 41) du toit fixe (1) du véhicule.

4. Toit de véhicule selon l'une des revendications 1 à 3, **caractérisé en ce que** la glissière (42) solidaire du toit est recouverte par une garniture d'étanchéité flexible (49) qui, lors de la projection et du coulissement du panneau (3), est au moins partiellement comprimée par le levier d'appui (43) sortant par le haut.

5. Toit de véhicule selon l'une des revendications précédentes, **caractérisé en ce que** le levier de projection (27) peut être actionné par un mécanisme (24, 33) situé à l'intérieur par rapport au levier d'appui (43).

6. Toit de véhicule selon l'une des revendications 3 à 5, **caractérisé en ce que** la zone du toit fixe (1) du véhicule, dans laquelle est située la glissière (42) du levier d'appui (43), fait fonction de gouttière (52) s'étendant longitudinalement, qui est étanchée vis-à-vis de la zone du levier de projection (27) par la surface d'étanchéité d'un joint (50).

7. Toit de véhicule selon l'une des revendications précédentes, **caractérisé en ce qu'**un dispositif d'appui (43, 143) est placé de chaque côté du panneau (3, 103).

8. Toit de véhicule selon l'une des revendications précédentes, **caractérisé en ce que** le dispositif pour projeter (27) et le dispositif pour faire coulisser (10) le panneau (3) peuvent être actionnés par des organes d'entraînement différents (37, 38).

9. Toit de véhicule selon au moins l'une des revendications précédentes 1 à 7, **caractérisé en ce que** le dispositif pour projeter (127) et le dispositif pour faire coulisser (110) le panneau (103) peuvent être actionnés par un organe d'entraînement commun (137).
